# EUROPEAN PATENT APPLICATION

(11) **EP 2 336 513 A2**
(43) Date of publication of application: **22.06.2011**
(21) Application number: 10177885.0
(22) Date of filing: 21.09.2010
(51) Int. Cl.: F01N 3/20

(54) **Liquid reductant dosing reservoir and method for its manufacture**

(30) Priority: 15.12.2009 US 638317
(71) Applicant: Delphi Technologies, Inc., Troy, MI 48007 (US)
(72) Inventor: Radillo, Alfredo, 32472, Cd. Juarez (MX); Castillo, Jesus, 32546, Cd. Juarez (MX); Chavez, Isai, 32563, Cd. Juarez (MX)
(74) Representative: Denton, Michael John

(57) **Abstract**

A liquid reductant dosing reservoir (33) for a combustion exhaust treatment system (5) is disclosed comprising:
(a) an enclosed reservoir (33) comprising a lower member (40) comprising a bottom and one or more sides, an upper member (39) comprising a top having at least one opening therein, an inlet (25), and an outlet (27);
(b) a component (37) disposed inside of the reservoir, affixed to the bottom,;
(c) a flexible hollow plastic conduit (43) connected at one end to the reservoir top at the opening and connected at the other end to the component (37), the conduit being impervious to the liquid reductant and the connections at each end of the conduit sealed against penetration by the liquid reductant, such that a path free of liquid reductant is provided between the component and the opening; and
(d) at least one electric wire (32) disposed inside the conduit (43), providing an electrical connection between the component (37) to outside of said reservoir.

## Description

### TECHNICAL FIELD

This invention relates to a reservoir for a fluid dosing system. More specifically, the invention relates to a reservoir for holding a reducing agent for introduction into a combustion exhaust gas.

### BACKGROUND OF THE INVENTION

The emission of nitrogen oxide (NOₓ) compounds in engine exhausts has long been the focus for health professionals and regulatory agencies worldwide. In many locations, regulations require stringent reductions of NOₓ levels in new equipments. NOₓ emissions may be found in a variety of systems such as internal combustion engines, gas turbine exhaust, lean bum engines, industrial boilers, process heaters or other process streams.

In order to reduce NOₓ emissions, it is known to use a selective catalytic reduction (SCR) device to treat an exhaust flow and to significantly reduce NOₓ emissions. In an SCR system a reducing agent, for example urea solution, is dosed into the exhaust gas flow upstream of an SCR catalyst. This reducing agent is then usually reacted in the presence of a catalyst downstream of the injection point in an SCR device. Within the SCR device NOₓ compounds are then reduced to nitrogen. WO200411141 discloses such a device.

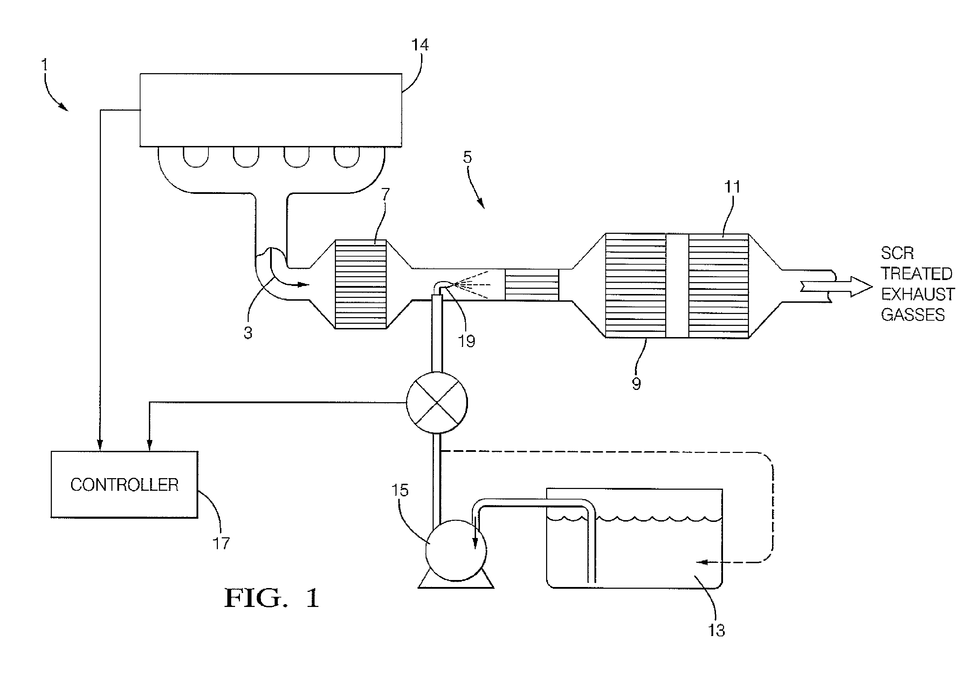

The general operation of an SCR device is shown in FIG. 1, in which a diesel engine 1 produces an exhaust flow comprising various exhaust gases 3. The exhaust gases are conveyed through an exhaust system, indicated generally at 5, comprising an oxidation catalyst device 7, a selective reduction catalyst device 9 and a slip catalyst 11.

The oxidation catalyst device 7 is a flow through device that consists of a canister containing a honeycomb-like structure or substrate. The substrate has a large surface area that is coated with an active catalyst layer. This layer contains a small, well dispersed amount of precious metals such as platinum or palladium. As the exhaust gases traverse the catalyst, carbon monoxide, gaseous hydrocarbons and liquid hydrocarbon particles (unburned fuel and oil) are oxidized, thereby reducing harmful emissions.

The SCR device 9 performs SCR treatment of NOₓ using ammonia derived from a source of urea as a chemical reductant. A slip catalyst 11 may be located downstream of the SCR device 9 to clean up any unreacted ammonia.

Urea for the SCR device 9 is stored in a tank 13 which is in fluid communication with the exhaust system 5. A pump 15 is provided to pump urea from the tank 13 to the exhaust system 5. The supply of urea is controlled by a control unit 17, for example the engine control unit, which receives engine speed and other engine parameters from the engine 1. An injection device 19 (also referred to herein as a fluid dosing device) is used to inject the urea into the exhaust flow.

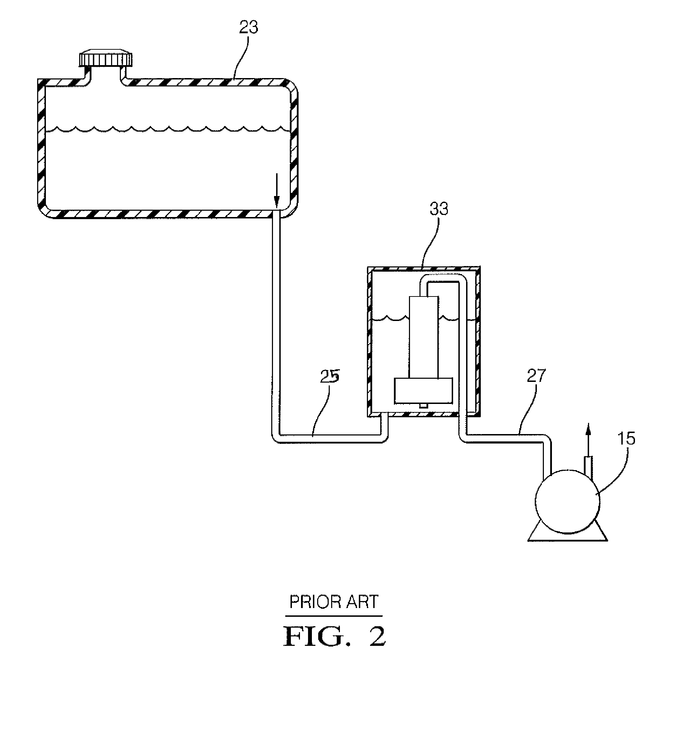

As a 32.5% urea solution freezes at -11.5°C, urea delivery systems must be adapted for delivery of liquid urea to the vehicle exhaust system under conditions that would normally cause the liquid urea to freeze. One solution would be to simply heat the storage tank 13. However, this can require substantial quantities of energy to maintain the entire storage tank 13 in a liquid state and can take significant time to thaw if the tank has become completely frozen.. An alternative arrangement is to place a smaller reservoir downstream of the storage tank that can be unfrozen quickly and/or maintained as liquid more efficiently since it contains a smaller amount of liquid urea. Such an arrangement is shown in FIG. 2, with urea flowing from storage tank 23 into dosing reservoir 33 through inlet 25, and then pumped out of dosing reservoir 33 by pump 15 through outlet 27 from where it flows to the exhaust stream as shown in FIG. 1. Alternatively, the dosing reservoir can be positioned adjacent to and in physical contact with the storage tank or even inside the storage tank so that heat from the heated dosing reservoir during prolonged periods of operation will help thaw the storage tank or maintain it in a liquid state.

A liquid reductant dosing reservoir as shown in FIGS. 1 and 2 may include a number of components that require communication of some sort (e.g., communication of electrical signals, fluid flow communication) outside of the reservoir housing. For a variety of reasons, including but not limited to ease of assembly and ease of service, it is desirable to attach components to an attachable and/or removable top piece of a liquid reductant dosing reservoir and to also route the wires, pipes, and the like necessary for such communication through such a top piece. For example, a pickup tube for withdrawing liquid reductant from the reservoir may be advantageously mounted to the underside of a reservoir top piece and extend therefrom toward the bottom of the reservoir from where liquid reductant will be drawn. Similarly, a vertical rod heater may also be advantageously mounted to the underside of a reservoir top piece and extend therefrom toward the bottom of the reservoir to provide a beneficial heat distribution pattern throughout the reservoir. Some components, however, are more effectively mounted to the bottom of a reservoir, for example, a liquid level sensor. Such components may still require communication, e.g., electrical communication, with the outside of the reservoir, and it is toward providing such communication in the relatively hostile liquid reductant environment that the invention is directed.

### SUMMARY OF THE INVENTION

According to the present invention, there is provided a liquid reductant dosing reservoir for a combustion exhaust treatment system comprising:
(a) an enclosed reservoir comprising a lower member comprising a bottom and one or more sides, an upper member comprising a top having at least one opening therein, an inlet, and an outlet;
(b) a component disposed inside of the reservoir, affixed to the bottom,;
(c) a flexible hollow plastic conduit connected at one end to the reservoir top at the opening and connected at the other end to the component, the conduit being impervious to the liquid reductant and the connections at each end of the conduit sealed against penetration by the liquid reductant, such that a path free of liquid reductant is provided between the component and the opening; and
(d) at least one electric wire disposed inside the conduit, providing an electrical connection between the component to outside of said reservoir.

A method for assembling a liquid reductant dosing reservoir for a combustion exhaust treatment system is also provided comprising:
(a) providing a lower reservoir member comprising a bottom and one or more sides, an upper member comprising a top having at least one opening therein, an inlet, and an outlet;
(b) affixing a component inside of the lower reservoir member to the bottom;
(c) providing an upper reservoir member comprising a top having at least one opening therein and positioning the upper reservoir member proximate to the lower reservoir member;
(d) providing a flexible hollow plastic conduit and disposing at least one electric wire therein;
(e) connecting the flexible hollow plastic conduit at one end to the reservoir top at the opening and at the other end to the component such that the electric wire is connected to the component and then attaching the upper reservoir member to the lower reservoir member, the conduit being impervious to the liquid reductant and the connections at each end of the conduit sealed against penetration by the liquid reductant, thereby providing an electrical connection between the component to outside of the reservoir along a path free of liquid reductant between the component and the opening.

The invention provides effective electrical communication along a path free of liquid reductant between a bottom-affixed component and the outside of the reservoir that is easy to assemble and resists stresses that can be caused by relative motion of the top and bottom members of the reservoir due to thermal expansion and assembly/disassembly. These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 depicts a known SCR system.

FIG. 2 depicts a known reservoir configuration for dosing liquid reductant as part of an SCR system.

FIG. 3 shows an exemplary liquid reductant dosing module according to the invention.

FIG. 4 shows a flexible conduit connection according to an exemplary embodiment of the invention.

### DESCRIPTION OF THE PREFERRED EMBODIMENTS

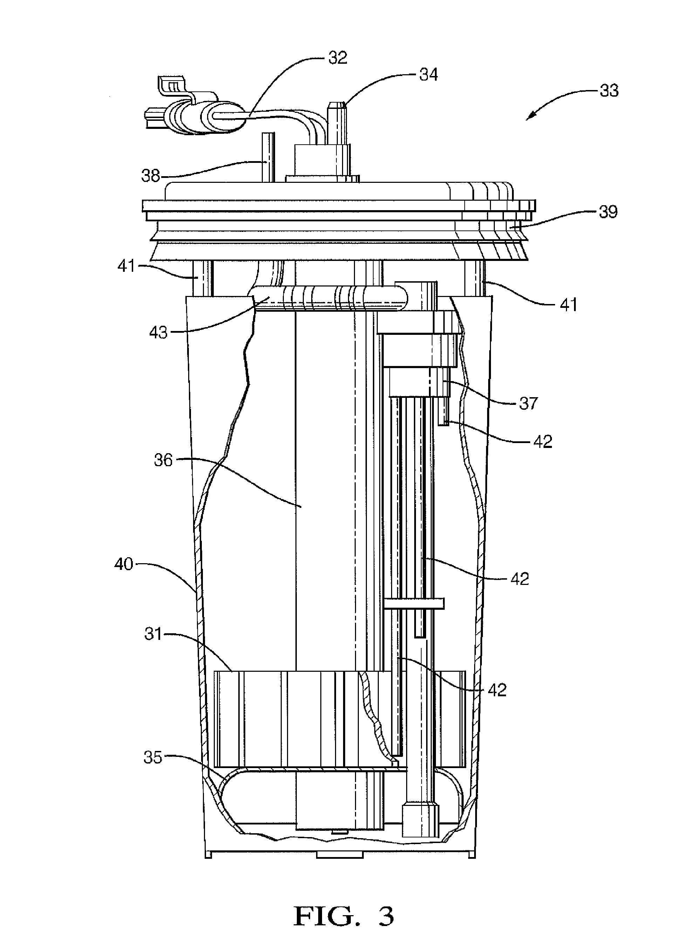

Referring now to the Figures, the invention will be described with reference to specific embodiments, without limiting same. Turning now to FIG. 3, there is shown a liquid reductant dosing reservoir 33 having lower reservoir member 40 and upper reservoir member 39, which join together to form a sealed reservoir. Upper and lower reservoir members may be made of any material suitable for fabrication and assembly and functioning as a reservoir for a liquid reductant such as urea. In one exemplary embodiment, upper reservoir member 39 is a plastic material such as nylon 6 or other nylon resins such as Zytel®,, and lower reservoir member 40 is a metallic material such as stainless steel, or plastic materials as described for upper reservoir member 39. Guide rods 41 attached to upper reservoir member 39 engage with corresponding guide channels in the wall of lower reservoir member 40 or guide members attached to the wall of lower reservoir member 40 in order to ensure proper mating of the upper and lower reservoir members.

Upper reservoir member 39 has affixed thereto a vertical rod heater 36 that extends downward therefrom toward the bottom of the reservoir. Electrical cable 32 provides power from outside of the reservoir through an opening in upper reservoir member 39 to the rod heater 36 to thaw frozen liquid reductant and/or to maintain liquid reductant in a liquid state. An exemplary rod heater useful as rod heater 36 is more fully described in the U.S. patent application filed on even date herewith entitled "Liquid Reductant Dosing Module with Heating Device", the disclosure of which is incorporated herein in its entirety. Other types of heaters and configurations, e.g., PTC heaters, may also be used as is known in the art. Heat sink 31, which may be of any suitable conductive material that is compatible with the liquid reductant environment (e.g., aluminum with an anodized surface), is connected to the bottom area of rod heater 36 to enhance transfer of heat from rod heater 36 to the liquid reductant in the reservoir.

Pickup tube 34, which may be of any suitable material, e.g., stainless steel, is also affixed to upper reservoir member 39 and extends downward through an opening in upper reservoir member 39 to draw liquid reductant from near the bottom of the reservoir. In an exemplary embodiment, the pickup tube 34 is in contact with or is proximate to the rod heater 36 in order to limit any frozen blockages in the pickup tube. In one exemplary embodiment, the pickup tube 34 is inside a hollow rod heater 36. Associated with the bottom end of pickup tube 34 is an umbrella valve 35 that can open and close in response to fluid pressure changes, which serves to shield the open bottom end of pickup tube 34 from any ice that forms in the liquid reductant. A filter or screen element (not shown) may also be associated with the bottom end of pickup tube 34.

With continued reference to FIG. 3, level sensor 37 is attached to the bottom of lower reservoir member 40. Level sensor 37 may be any type useful for sensing the level of polar aqueous solutions of liquid reductant such as urea. Exemplary types of level sensors include capacitive sensors, resistive sensors utilizing thermistors, optical, ultrasonic sensor, and the like, all of which are well-known in the art both in design and principles of operation. In FIG. 3, an exemplary embodiment of a resistive level sensor 37 is shown having electrode rods 42 of varying lengths to provide varying electrical output levels based on the level of liquid reductant in the reservoir. Like the resistive level sensor embodiment shown in FIG. 3, one common feature of the above-described remote level sensors or other electric, electromechanical, or electronic components is that they generally provide an electrical output signal that is communicated to a control module located outside of the reservoir. Of course, other devices requiring an electrical connection can be used instead a level sensor, such as reductant concentration sensors, temperature sensors, and the like.

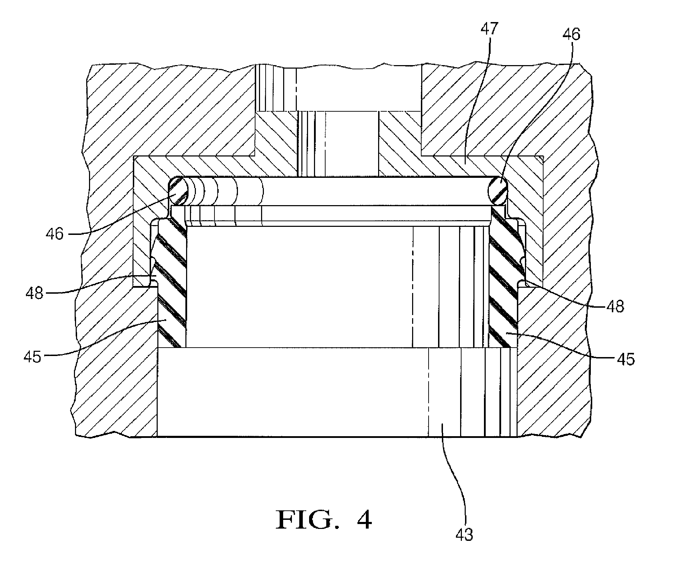

According to the present invention, a flexible hollow plastic conduit 43 is connected at one end to an opening in upper reservoir member 39 and connected at the other end to level sensor 37. The conduit 43 may be made of any flexible plastic material that is impervious to the liquid reductant such as nylon 6 or other nylon resins such as Zytel®, polyoxymethylene resin, or polyphthalamides such as Amodel®. The flexibility of the conduit enables it to be routed around other components, such as the rod heater 36, and also enables it to be connected at each end prior to assembly of the upper reservoir member 39 to the lower reservoir member 40 while allowing the upper and lower reservoir members to be repositioned with respect to one another during the assembly process. Electric wires (not shown) inside conduit 43 connect the electrical output leads of sensor 37 to electrical connector 38 on the outside of upper reservoir member 39. The connections of conduit is 43 to the upper reservoir member 39 and the level sensor 37 are also sealed against penetration by the liquid reductant, such that a path free of liquid reductant is provided between the level sensor 37 and the opening in the upper reservoir member 39. One exemplary embodiment of such a seal is shown in FIG. 4. FIG. 4 depicts a cross-section view where conduit 43 is sealingly connected to a connector 47 that is disposed on the upper reservoir member or the level sensor (not shown in FIG. 4). Conduit 43 is fitted with a connector 45 having double barbs 48. Connector 47 is adapted to receive connector 45, and is made of a plastic material that is soft enough for barbs 48 to engage, and has an o-ring 46 against which the end of connector 46 is seated. Of course, FIG. 4 represents an exemplary connection, and other connection configurations may be used as well to sealingly connect the flexible conduit 43 to the upper reservoir member and the level sensor or other bottom-mounted devices.

## Claims

1. A liquid reductant dosing reservoir (33) for a combustion exhaust treatment system comprising:
(a) an enclosed reservoir (33) comprising a lower member (40) comprising a bottom and one or more sides, an upper member (39) comprising a top having at least one opening therein, an inlet (25), and an outlet (27);
(b) a component (37) disposed inside of said reservoir affixed to said bottom;
(c) a flexible hollow plastic conduit (43) connected at one end to the reservoir top at said opening and connected at the other end to said component (37), said conduit (43) being impervious to said liquid reductant and said connections at each end of said conduit sealed against penetration by said liquid reductant, such that a path free of liquid reductant is provided between said component and said opening; and
(d) at least one electric wire (32) disposed inside said conduit, providing an electrical connection between said component to outside of said reservoir.

2. A liquid reductant dosing reservoir (33) according to claim 1 wherein said component (37) is a liquid level sensor.

3. A liquid reductant dosing reservoir (33) according to claim 2 wherein said liquid level sensor (37) is resistive sensor with a thermistor.

4. A liquid reductant dosing reservoir (33) according to any one of claims 1 to 3 wherein flexible conduit (43) comprises nylon plastic.

5. A liquid reductant dosing reservoir (33) according to any one of claims 1 to 4 wherein said reservoir top at said opening and said component each comprise a fitting comprising an o-ring (46) and a plurality of barbs (48) for sealingly connecting to said flexible conduit (43).

6. A method for assembling a liquid reductant dosing reservoir (33) as claimed in claim 1 for a combustion exhaust treatment system (5) comprising:
(a) providing a lower reservoir member (40) comprising a bottom and one or more sides, an upper member (39) comprising a top having at least one opening therein, an inlet (25), and an outlet (27);
(b) affixing a component (37) inside of said lower reservoir member (40) to said bottom;
(c) providing an upper reservoir member (39) comprising a top having at least one opening therein and positioning said upper reservoir member (39) proximate to said lower reservoir member (40);
(d) providing a flexible hollow plastic conduit (43) and disposing at least one electric wire (32) therein;
(e) connecting said flexible hollow plastic conduit (43) at one end to the reservoir top at said opening and at the other end to said component (37) such that said electric wire (32) is connected to said component (37) and then attaching said upper reservoir member (39) to said lower reservoir member (40), said conduit (43) being impervious to said liquid reductant and said connections at each end of said conduit sealed against penetration by said liquid reductant, thereby providing an electrical connection between said component (37) to outside of said reservoir (33) along a path free of liquid reductant between said component and said opening.
